# FASCICULE DE BREVET EUROPEEN

(11) **EP 1 048 386 B1**
(45) Date de publication et mention de la délivrance du brevet: **25.08.2004**
(21) Numéro de dépôt: 00450004.7
(22) Date de dépôt: 27.04.2000
(51) Int. Cl.: B23D 79/04

(54) **Procédé de métallisation localisée, en surface, de pièces en matériau composite et outil pour sa mise en oeuvre**
Verfahren zum Ausbringen eines örtlichen metallischen Schichtes an Oberfläche von Kompositmaterial und Werkzeug zum Durchführen des Verfahrens
Metallisation method locally on the surface of pieces in composite material and tool to realise this method

(30) Priorité: 28.04.1999 FR 9905563
(43) Date de publication de la demande: 02.11.2000
(73) Titulaire: Aerospatiale Matra Airbus S.A., 75781 Paris Cedex 16 (FR)
(72) Inventeur: Portal, Fabrice, 64530 Ger (FR)
(74) Mandataire: Thébault, Jean-Louis

(56) Documents cités:
- US-A- 2 838 828
- US-A- 5 257 531

## Description

La présente invention a trait à la métallisation localisée, en surface, de pièces en matériau composite et plus particulièrement de pièces, notamment destinées à être montées sur des aéronefs, constituées d'un matériau composite recouvert d'une couche d'un matériau conducteur de l'électricité à vocation de protection contre la foudre ou contre des charges électrostatiques trop fortes par exemple, et d'un revêtement protecteur de surface de ladite couche métallique, formé d'une couche de peinture, d'anodisation, ou autre.

Après réalisation par moulage, ces pièces sont ensuite percées en différents endroits pour pouvoir être fixées à la place qui leur est destinée. Certains des points percés seront utilisés comme points de contact pour une mise à la masse.

Comme les pièces sont peintes ou revêtues d'une couche protectrice analogue isolante électriquement, il est nécessaire de dégager le pourtour des trous choisis pour faire apparaître la couche conductrice de l'électricité, cette opération étant appelée métallisation. Ceci s'opère jusqu'à maintenant par un processus long, fastidieux et en fin de compte coûteux qui consiste en les étapes suivantes :
- Moulage de la pièce composite avec la couche de matériau conducteur en surface (généralement une toile métallique d'aluminium ou de bronze par exemple).
- Perçage / détourage des trous à l'aide d'une machine à commande numérique.
- Masquage manuel, à l'aide de petites pastilles collantes, des trous devant subir une métallisation.
- Peinture de la pièce, le terme peinture désignant ici, ainsi qu'ultérieurement dans la description qui va suivre, tout revêtement protecteur recouvrant la couche conductrice de la pièce.
- Démasquage des trous en enlevant manuellement des pastilles.
- Reprise manuelle des perçages n'ayant pas été masqués (trous non métallisés) pour déboucher des trous remplis de peinture.
- Finition manuelle des trous à métalliser. Cette dernière opération est délicate, longue, fastidieuse et susceptible d'entraîner des métallisations défectueuses.

En effet, malgré la présence de pastilles, la peinture s'insinue quand même sous les pastilles, formant ainsi une couche de peinture à la périphérie des trous à métalliser. Il faut donc décaper cette périphérie pour enlever toute trace de peinture, ainsi que toute partie de la résine du matériau composite susceptible de recouvrir la couche conductrice, généralement une toile métallique qui est noyée au moins partiellement dans ladite résine.

Cette mise à nu de la couche conductrice est effectuée par un manipulateur qui introduit dans l'alésage l'extrémité libre d'une brosse à métalliser entraînée en rotation et décape la zone périphérique de l'orifice d'alésage. Puis, visuellement, le manipulateur vérifie le travail effectué. S'il reste de la peinture, il recommence. Généralement, il recommence un grand nombre de fois pour une même pièce, avec le risque d'aller trop loin, c'est-à-dire d'enlever également des morceaux de la couche conductrice. L'intégrité de cette dernière est alors atteinte, ce qui risque de dégrader la qualité du contact électrique établi ultérieurement pour la mise à la masse.

Le risque d'atteinte de l'intégrité de la couche conductrice n'est pas mince, au contraire de la couche de peinture qui, elle, est très fine, la pièce étant en outre le plus souvent galbée, en sorte que sur une même zone on peut encore trouver, ici, de la peinture et, un peu plus loin, une partie de la couche conductrice enlevée.

Un tel processus engendre ainsi des cycles de fabrications longs et à qualité aléatoire, outre le surcoût entraîné par le caractère artisanal de la métallisation.

Afin de remédier à ces inconvénients, diverses voies ont été explorées, telles que l'amélioration des brosses à métalliser, l'utilisation d'un assemblage varié de brosses à métalliser, ou bien encore le recours au sablage ou à des abrasifs.

Aucune de ces voies n'apporte de réponse pleinement satisfaisante aux problèmes de la métallisation, notamment du fait de la nécessité d'un recours à un examen visuel par le manipulateur et du risque, présent quels que soient les moyens mis en oeuvre, d'aller trop loin dans le décapage de la peinture.

La présente invention vise précisément à résoudre ces problèmes en proposant un procédé de métallisation apte à réaliser automatiquement une métallisation optimale, c'est-à-dire avec une mise à nu contrôlée, éventuellement totale de la couche conductrice sans atteinte de l'intégrité physique de cette dernière.

A cet effet, l'invention a pour objet un procédé de métallisation localisée, en surface, de pièces en matériau composite, du type recouvert en surface d'une couche d'un matériau conducteur de l'électricité, elle-même revêtue d'une couche protectrice isolante électriquement, telle qu'une peinture ou analogue, caractérisé en ce qu'après moulage de ladite pièce en matériau composite avec ladite couche conductrice en surface, on revêt de ladite peinture ou analogue la totalité de la surface, côté couche conductrice de la pièce, puis, au droit de chaque zone de ladite surface dédiée à un trou à métalliser, on réalise un arasage jusqu'à l'affleurement de la couche conductrice, à l'aide d'une arête métallique pressée élastiquement et déplacée sur la surface de la pièce, l'arrêt de l'arasage étant commandé consécutivement à l'atteinte ou au dépassement d'un seuil prédéterminé de conduction électrique entre ladite couche conductrice et ladite arête métallique et, enfin, on perce et détoure les divers trous de la pièce.

Un tel procédé peut être mis en oeuvre à l'aide d'une machine à commande numérique effectuant toutes les étapes dudit procédé, de manière automatique, et sur des pièces pouvant avoir des formes complexes, notamment des surfaces gauches.

L'invention a également pour objet un outil à métalliser particulièrement approprié à la réalisation de l'arasage conformément au procédé ci-dessus.

Cet outil, plus particulièrement destiné à être monté sur une tête de fraisage d'une machine multi-axes à commande numérique, est constitué d'une broche rotative munie à son extrémité d'un bras transversal portant à une extrémité une masse d'équilibrage et à son autre extrémité un bras porte-outil articulé sur ledit bras transversal autour d'un axe orthogonal à l'axe de la broche, ledit bras porte-outil étant tourné vers ledit axe de la broche et portant une plaquette de carbure ou analogue, positionnée de façon à former un angle de coupe négatif et à définir une arête d'arasage dont une extrémité est à l'aplomb de l'axe de la broche, des moyens de rappel étant prévus entre le bras transversal et le bras porte-outil pour presser élastiquement la plaquette ou analogue contre la surface à araser, ladite plaquette étant reliée électriquement à un détecteur de contact lui-même relié, d'une part, à la couche conductrice de la pièce à métalliser par une connexion amovible et, d'autre part, à la commande numérique de la machine multi-axes, ledit détecteur comportant un générateur de courant et commandant l'arrêt de ladite broche rotative suite à l'atteinte ou au dépassement d'un seuil prédéterminé d'intensité du courant circulant entre la couche conductrice et la plaquette.

Ledit seuil d'intensité de courant est bien entendu variable et dépend notamment de la qualité de la métallisation recherchée.

Quand la plaquette de carbure touche le matériau conducteur de la pièce, le courant passe et l'intensité de ce courant de passage est une bonne image du degré de dénudage de la couche conductrice.

Avantageusement, la plaquette de carbure est montée sur le bras oscillant par un axe autour duquel peut pivoter la plaquette en sorte d'épouser constamment la surface à araser notamment lorsqu'elle est convexe ou concave.

Suivant un mode de réalisation, la liaison électrique entre la plaquette et le détecteur de contact est réalisée par un conducteur électrique reliant la plaquette à un collecteur agencé sur la broche rotative et en contact avec un balai lui-même relié audit détecteur.

Avantageusement, une telle liaison peut être dédoublée pour une détection d'anomalie sur cette liaison, à des fins de sécurité.

D'autres caractéristiques et avantages ressortiront de la description qui va suivre d'un mode de réalisation de l'outil à métalliser selon l'invention et de sa mise en oeuvre en application du procédé de métallisation également conformément à l'invention, description donnée à titre d'exemple uniquement et en regard des dessins annexés sur lesquels :
- Figures 1a et 1b sont respectivement une vue de dessus et une vue en coupe axiale d'un trou à métalliser d'une pièce en matériau composite,
- Figure 2 est une vue schématique en coupe verticale axiale d'un outil à métalliser selon l'invention,
- Figure 3 est une vue de dessus suivant la flèche F de la partie de l'outil de la figure 2 disposée sous le bras transversal et,
- Figure 4 est une vue en perspective schématique d'une machine multi-axes à commande numérique équipée d'un détecteur pour la mise en oeuvre du procédé de l'invention.

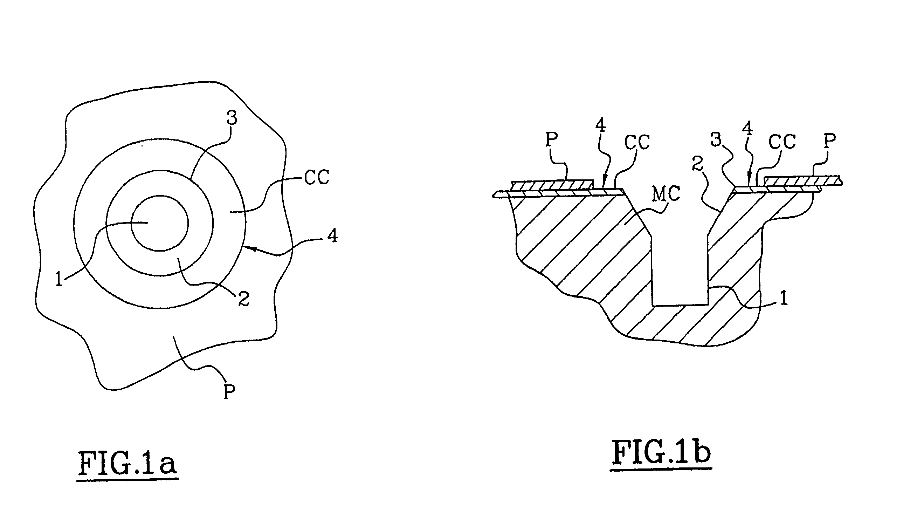

Les figures 1a ,1b illustrent un trou à métalliser d'une pièce en matériau composite. La structure de la pièce est schématisée suivant la coupe de la figure 1b par les références MC, CC, et P désignant respectivement le matériau composite, la couche conductrice et le revêtement de protection. La couche conductrice CC est généralement une toile ou un grillage métallique, par exemple en aluminium ou en bronze.

Le revêtement de protection P est un revêtement de peinture ou un autre revêtement de protection tel qu'une anodisation par exemple. En 1 est représenté un alésage 1 cylindrique non débouchant, précédé d'une partie conique 2 d'orifice 3 circulaire.

Le but de la métallisation du trou est de dénuder tout autour de l'orifice 3 sur une zone annulaire 4, la couche conductrice CC recouvrant la pièce. La zone annulaire dénudée 4 permettra par la suite d'assurer au droit de cette zone 4 la liaison électrique entre la couche conductrice CC de la pièce et une tresse métallique de mise à la masse, maintenue en place par l'organe de fixation reçu dans l'alésage 1.

Un premier objet de l'invention est un procédé apte à réaliser automatiquement une telle métallisation dans des conditions de qualité maximale notamment.

Le procédé de l'invention est un procédé de métallisation localisée, en surface, de pièces en matériau composite, du type recouvert en surface d'une couche d'un matériau conducteur de l'électricité, elle-même revêtue d'une couche protectrice isolante électriquement, telle qu'une peinture ou analogue, caractérisé en ce qu'après moulage de ladite pièce en matériau composite avec ladite couche conductrice en surface, on revêt de ladite peinture ou analogue la totalité de la surface, côté couche conductrice de la pièce, puis, au droit de chaque zone de ladite surface dédiée à un trou à métalliser, on réalise un arasage jusqu'à l'affleurement de la couche conductrice, à l'aide d'une arête métallique pressée élastiquement et déplacée sur la surface de la pièce, l'arrêt de l'arasage étant commandé consécutivement à l'atteinte ou au dépassement d'un seuil prédéterminé de conduction électrique entre ladite couche conductrice et ladite arête métallique et, enfin, on perce et détoure les divers trous de la pièce.

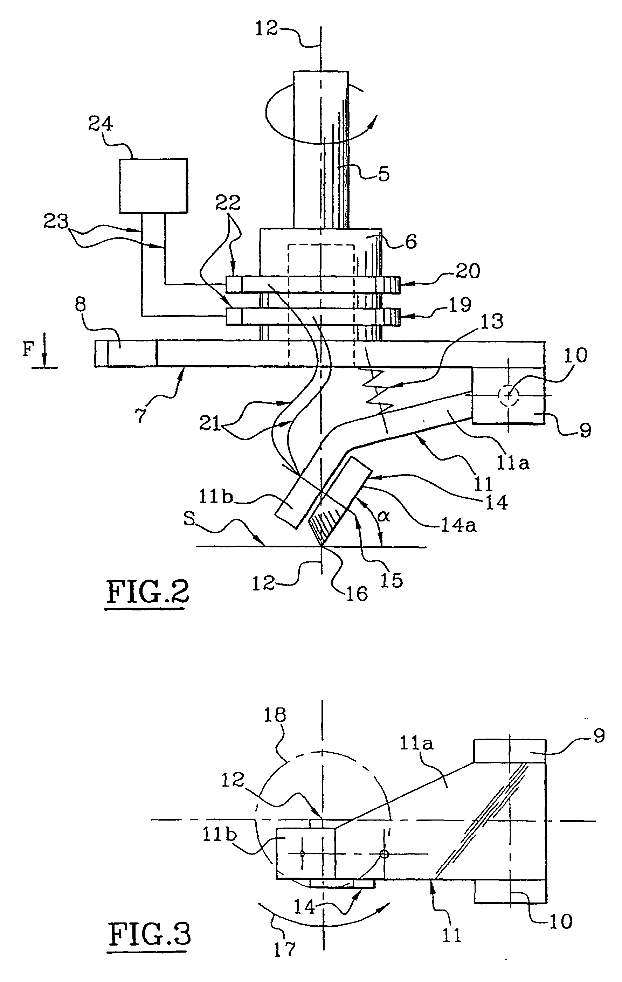

Pour une mise en oeuvre optimale de ce procédé, et conformément à un second objet de l'invention , il est proposé un outil à métalliser illustré par les figures 2 et 3 suivant un mode de réalisation.

L'outil comporte une broche 5 présentant une section cylindrique 6 de diamètre plus important et à l'extrémité de laquelle est fixé un bras transversal 7.

A l'une de ses extrémités, le bras 7 porte une masse d'équilibrage 8 et à son autre extrémité une platine 9 fixée sur la face inférieure du bras et sur laquelle est articulé, sur un axe 10 orthogonal à l'axe de la broche 5, un bras porte-outil 11 dirigé vers l'axe de la broche.

Le bras 11 est légèrement déporté par rapport à l'axe de rotation 12 de la broche 5.

Dans le mode de réalisation illustré sur les dessins, le bras 11 comprend une première partie 11 a prolongée par une partie coudée 11b.

Entre la partie 11a et le bras transversal 7 est disposé un ressort de rappel 13. Sur la partie 11b est fixée une plaquette de carbure 14, par l'intermédiaire d'un axe 15 permettant à la plaquette de pivoter autour de cet axe.

La plaquette 14 est une plaquette conventionnelle du type utilisée pour le fraisage.

Elle présente une arête rectiligne 16 qui est positionnée de façon à toucher la surface à décaper suivant un segment parallèle à l'axe 10 et dont une extrémité est à l'aplomb de l'axe 12 de la broche 5. En outre, la plaquette 14 est positionnée en sorte de présenter, suivant le sens de rotation 17 (figure 3) de l'outil par rapport à la surface (symbolisée en S sur la figure 2) de la pièce à décaper, un angle de coupe a négatif, la face 14a de la plaquette étant inclinée vers l'avant par rapport au sens de déplacement (17) de la plaquette.

On a symbolisé en 18 sur la figure 3 l'aire circulaire, centrée sur l'axe 12 de la broche 5, de grattage ou de décapage de la surface S par l'arête 16 de la plaquette 14.

La broche 5 est susceptible d'être montée par exemple sur une tête de fraisage d'une machine d'usinage multi-axes à commande numérique.

La plaquette 14 peut ainsi être entraînée en rotation autour de l'axe 12 en étant pressée constamment, de manière contrôlée, contre la surface S, par la force du ressort de rappel 13.

Un tel montage, complété par la possibilité de libre pivotement de la plaquette 14 autour de son axe 15, lui permet de suivre parfaitement la géométrie parfois complexe de la pièce à métalliser et de s'affranchir de la non-uniformité de l'épaisseur de la couche de peinture P à décaper.

Le positionnement de la plaquette avec l'angle de coupe a négatif permet d'effectuer la métallisation en grattant la peinture P sans risque d'entailler le matériau de la couche conductrice CC sous-jacente.

Par ailleurs, la section élargie 6 de la broche 5 porte deux collecteurs 19 et 20 reliés chacun à la plaquette métallique 14 par un conducteur 21 et associés chacun à un balai électrique 22 relié par un conducteur 23 à un système de détection 24.

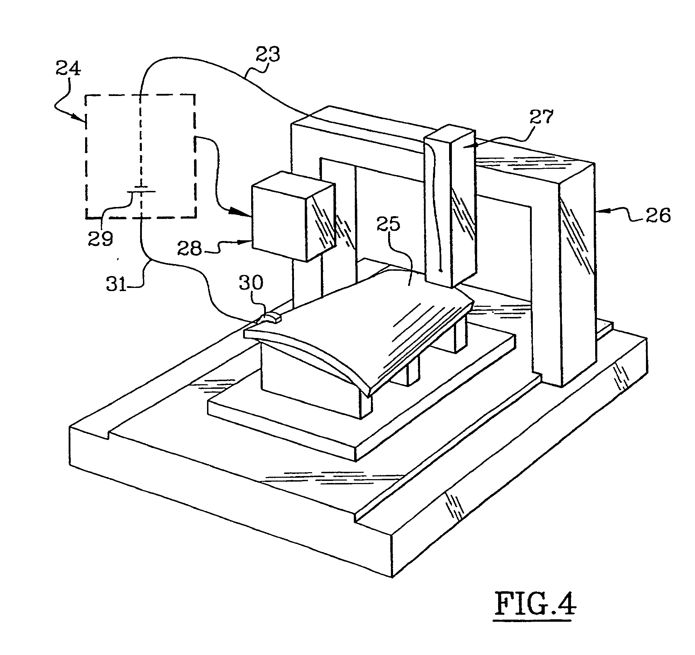

On va maintenant se reporter à la figure 4 représentant schématiquement une machine d'usinage multi-axes à commande numérique, telle que celles utilisées pour le perçage / détourage de pièces en matériau composite du type dont il est présentement question, c'est-à-dire recouvertes d'une couche externe conductrice elle-même revêtue d'une peinture ou analogue de protection.

Sur la figure 4, on a représenté en 25 une pièce du type ci-dessus, par exemple un panneau de carénage galbé, placé sur le banc d'usinage de ladite machine dont sont représentés très schématiquement uniquement le portique d'usinage 26, un chariot porte-outil 27 mobile sur ce portique et la commande numérique 28 de la machine.

Sur la tête porte-outil du chariot 27 est montée à la manière conventionnelle la broche 5 de l'outil de la figure 2, cette broche ainsi que la tête porte-outil n'étant pas représentées sur la figure 4.

L'un des conducteurs 23 est relié à un système de détection 24 comportant un générateur de courant symbolisé en 29.

Le système de détection 24, qu'on appellera par la suite détecteur, est également connecté à la commande numérique 28 et à la couche conductrice du panneau en matériau composite 25.

A cet effet, dans une zone de la pièce peinte 25, de préférence une zone qui fera partie des chutes non utilisées lors de la mise à dimension de la pièce, on gratte une petite zone de peinture P pour mettre à nu le matériau conducteur CC sous-jacent. Une pince symbolisée en 30 sera utilisée pour assurer la connexion du conducteur 31 de liaison avec le détecteur 24, avec ledit matériau conducteur CC.

En variante, le conducteur 31 qui fait office de fil de masse peut être doublé par un fil de contrôle de ce fil de masse principal 31 en prenant en compte un éventuel mauvais contact entre la pince 30 et le panneau 25 ou la coupure dudit fil de masse 31.

Conformément à l'invention, on procède avant le perçage / détourage des trous (1, 2) du panneau 25, à la métallisation dans les zones appropriées.

Grâce à la commande numérique 28, la plaquette 14 est amenée en regard de chaque partie à métalliser de la surface S de la pièce 25, l'axe 12 de la broche 5 étant positionné sur l'emplacement du centre de chaque futur trou.

La plaquette 14 est pressée contre la surface S avec une pression contrôlée par la commande numérique et la rotation de la plaquette autour de l'axe 12 est lancée.

La plaquette 14 gratte et arase la peinture P jusqu'à l'affleurement de la couche conductrice CC sous-jacente suivant la zone circulaire 18 (figure 3).

Dès la rotation de la broche 5, le générateur du courant 29 du détecteur 24 est activé.

Au début de l'action de la plaquette 14, le circuit électrique 15, 21, 19, 23, 31, 30 se comporte comme un circuit ouvert, le courant ne passe pas entre la couche conductrice CC du panneau 25 et la plaquette 14. Par contre, quand la plaquette 14 rencontre le matériau de la couche conductrice CC, le courant passe. Ce courant, recueilli par le détecteur 24, est comparé à un seuil d'intensité prédéterminé.

En effet, il faut pour que la métallisation soit suffisante, que la zone à métalliser soit suffisamment décapée, sans reste de peinture.

L'intensité du courant de passage entre la couche conductrice CC et la plaquette 14 donne une bonne idée du degré de dénudage, car plus la section de passage, c'est-à-dire la surface mise à nu, sera importante et plus le courant passera.

Ce seuil d'intensité est évidemment variable et dépend de la surface à dénuder et de la qualité de dénudage recherchée.

Il n'est pas souhaitable d'utiliser à la place du générateur de courant 29 un générateur de tension, car, dès qu'une petite partie de la couche conductrice est mise à nu, le circuit est fermé, mais on peut très difficilement avec ce moyen évaluer l'importance du dénudage, ce qui retentit inévitablement sur la qualité.

Dès que ledit seuil d'intensité, par exemple quelques centaines de milliampères, est détecté, le détecteur 24 génère un signal d'arrêt envoyé à la commande numérique 28 afin de stopper l'outil et le décapage.

Pour une telle fonction, un seul des deux circuits 19, 21, 23 suffit. Le second circuit en parallèle (collecteur 20) est optionnel. C'est un circuit de contrôle permettant d'améliorer la sécurité de l'outil en prenant en compte tout fonctionnement défectueux du circuit principal (19), tel que mauvais contact dans le collecteur 19 dû à l'usure ou fil électrique (21, 23) cassé.

Dans un souci de sécurité maximale, pour éviter toute atteinte physique de la couche conductrice sous-jacente, on peut stopper l'outil dès qu'il y a détection du dépassement du seuil pré-fixé, c'est-à-dire sans attendre que ce seuil soit atteint en permanence au cours de la rotation de l'outil. Dans ce cas, on est sûr que la couche conductrice dénudée n'est pas atteinte, même s'il peut subsister, ici ou là dans l'aire 18, une zone encore recouverte de peinture, mais très amincie par le décapage. L'élimination de ces parcelles de peinture se fera alors manuellement mais rapidement, à la manière classique.

Lorsque les opérations de métallisation réalisées par la machine sont effectuées, il est alors procédé par la commande numérique 28 un perçage / détourage de tous les trous (1, 2) dont le panneau 25 doit être muni.

Le panneau 25 est alors éventuellement fini pour ce qui concerne la métallisation, dans le cas où la procédure de sécurité maximale évoquée immédiatement ci-dessus est mise en oeuvre.

Outre l'assurance de l'obtention d'une métallisation optimale, c'est-à-dire avec un décapage total de la peinture P ou analogue pratiquement sans risque d'atteinte physique de la sous-couche conductrice CC, le procédé de l'invention permet par son automatisation de réduire sensiblement la durée du cycle de métallisation d'une pièce, avec la réduction en coût concomitante que cela entraîne.

La vitesse de rotation de l'outil, de l'ordre de 600 tr/mn par exemple, suffit à créer un souffle d'air évacuant les copeaux vers l'extérieur, permettant ainsi de ne pas perturber la détection du passage du courant entre la couche conductrice CC et la plaquette 14.

Un système d'aspiration peut néanmoins être envisagé pour aspirer ces copeaux.

Il est à noter que l'outil selon l'invention peut être utilisé pour réaliser des métallisations sur toute pièce en matériau composite, quel que soit le but de ces métallisations et que des trous soient percés ou non au droit de celles-ci, les paramètres de l'outil étant adaptés à chaque pièce.

Enfin, l'invention n'est évidemment pas limitée aux modes de mise en oeuvre représentés et décrits ci-dessus, mais en couvre au contraire toutes les variantes couvertes par les revendications, notamment en ce qui concerne les dimensions, forme et agencement de la plaquette de carbure 14 ou tout autre élément métallique susceptible d'opérer les mêmes effets, le mode de montage flottant et élastique de la plaquette 14 ou analogue sur le porte-outil (5, 6, 7) et la configuration de ce dernier.

## Revendications

1. Procédé de métallisation localisée, en surface, de pièces en matériau composite, du type recouvert en surface d'une couche (CC) d'un matériau conducteur de l'électricité, elle-même revêtue d'une couche protectrice (P) isolante électriquement, telle qu'une peinture ou analogue, **caractérisé en ce qu'**après moulage de ladite pièce en matériau composite avec ladite couche conductrice (CC) en surface, on revêt de ladite peinture ou analogue (P) la totalité de la surface, côté couche conductrice (CC) de la pièce, puis, au droit de chaque zone de ladite surface dédiée à un trou à métalliser, on réalise un arasage jusqu'à l'affleurement de la couche conductrice (CC), à l'aide d'une arête métallique (16) pressée élastiquement et déplacée sur la surface de la pièce, l'arrêt de l'arasage étant commandé consécutivement à l'atteinte ou au dépassement d'un seuil prédéterminé de conduction électrique entre ladite couche conductrice (CC) et ladite arête métallique (16) et, enfin, on perce et détoure les divers trous de la pièce.

2. Outil à métalliser plus particulièrement destiné à être monté sur une tête de fraisage d'une machine multi-axes à commande numérique (26, 27, 28), notamment pour la mise en oeuvre du procédé selon la revendication 1, **caractérisé en ce qu'**il est constitué d'une broche rotative (5) munie à son extrémité d'un bras transversal (7) portant à une extrémité une masse d'équilibrage (8) et à son autre extrémité un bras porte-outil (11) articulé sur ledit bras transversal (7) autour d'un axe (10) orthogonal à l'axe (12) de la broche (5), ledit bras porte-outil (11) étant tourné vers ledit axe (12) de la broche et portant une plaquette de carbure (14) ou analogue, positionnée de façon à former un angle de coupe (α) négatif et à définir une arête d'arasage (16) dont une extrémité est à l'aplomb de l'axe (12) de la broche (5), des moyens de rappel (13) étant prévus entre le bras transversal (7) et le bras porte-outil (11) pour presser élastiquement la plaquette (14) ou analogue contre la surface à araser (S), ladite plaquette (14) étant reliée électriquement à un détecteur de contact (24) lui-même relié, d'une part, à la couche conductrice (CC) de la pièce à métalliser (25) par une connexion amovible (30,31) et, d'autre part, à la commande numérique (28) de la machine multi-axes, ledit détecteur (24) comportant un générateur de courant (29) et commandant l'arrêt de ladite broche rotative (5) suite à l'atteinte ou au dépassement d'un seuil prédéterminé d'intensité du courant circulant entre la couche conductrice (CC) et la plaquette (14).

3. Outil suivant la revendication 2, **caractérisé en ce que** la plaquette de carbure (14) est montée sur le bras oscillant (11) par un axe (15) autour duquel peut pivoter la plaquette (14), en sorte d'épouser constamment la surface à araser (S), notamment lorsqu'elle est convexe ou concave.

4. Outil suivant la revendication 2 ou 3, **caractérisé en ce que** la liaison électrique entre la plaquette (14) et le détecteur de contact (24) est réalisée par un conducteur électrique (21) reliant la plaquette (14) à un collecteur (19) agencé sur la broche rotative (5) et en contact avec un balai (22) lui-même relié audit détecteur (24).

5. Outil suivant la revendication 4, **caractérisé en ce que** ladite liaison électrique est dédoublée pour une détection d'anomalie sur ladite liaison.

6. Outil suivant l'une des revendications 2 à 5, **caractérisé en ce qu'**il comporte en outre un système d'aspiration des copeaux.

## Patentansprüche

1. Verfahren zum räumlich begrenzten Metallisieren der Oberfläche von Verbundwerkstoffteilen des Typs, der auf der Oberfläche mit einer Lage (CC) aus einem elektrisch leitenden Werkstoff bedeckt ist, die ihrerseits mit einer elektrisch isolierenden Schutzlage (P) wie etwa einer Farbe oder dergleichen beschichtet ist, **dadurch gekennzeichnet, dass** nach dem Formen des Verbundwerkstoffteils mit der leitenden Lage (CC) auf der Oberfläche die gesamte Oberfläche auf Seiten der leitenden Lage (CC) des Teils mit der Farbe (P) oder dergleichen beschichtet wird, woraufhin am Ort jeder Zone der Oberfläche, an dem ein zu metallisierendes Loch vorgesehen ist, eine Abtragung bis zur Ebene der leitenden Lage (CC) mit Hilfe einer Metallkante (16) ausgeführt wird, die elastisch gegen die Oberfläche des Teils gepresst und darauf verlagert wird, wobei die Beendigung der Abtragung in Reaktion auf das Erreichen oder Überschreiten eines vorgegebenen Schwellenwerts für die elektrische Leitung zwischen der leitenden Lage (CC) und der Metallkante (16) gesteuert wird, woraufhin schließlich die verschiedenen Löcher des Teils gebohrt und freigelegt werden.

2. Metallisierungswerkzeug, das insbesondere dazu bestimmt ist, an einem Fräskopf einer mehrachsigen Maschine (26, 27, 28) mit numerischer Steuerung montiert zu werden, insbesondere für die Ausführung des Verfahrens nach Anspruch 1, **dadurch gekennzeichnet, dass** es aus einem rotierenden Dom (5) gebildet ist, der an seinem Ende mit einem transversalen Arm (7) versehen ist, der an einem Ende eine Ausgleichsmasse (8) trägt und an seinem anderen Ende einen Werkzeugträgerarm (11) trägt, der an dem transversalen Arm (7) um eine zu der Achse (12) des Dorns (5) senkrechte Achse (10) angelenkt ist, wobei der Werkzeugträgerarm (11) zu der Achse (12) des Dorns gedreht ist und ein Carbidplättchen (14) oder dergleichen trägt, das in der Weise positioniert ist, dass es einen negativen Schnittwinkel (α) bildet und eine Abtragkante (16) definiert, wovon ein Ende zu der Achse (12) des Doms (5) senkrecht ist, wobei zwischen dem transversalen Arm (7) und dem Werkzeugträgerarm (11) Rückstellmittel (13) vorgesehen sind, um das Plättchen (14) oder dergleichen elastisch gegen die abzutragende Oberfläche (S) zu pressen, wobei das Plättchen (14) mit einem Kontaktdetektor (24) elektrisch verbunden ist, der einerseits über eine lösbare Verbindung (30, 31) mit der leitenden Lage (CC) des zu metallisierenden Teils (25) verbunden ist und andererseits mit der numerischen Steuerung (28) der mehrachsigen Maschine verbunden ist, wobei der Detektor (24) einen Stromgenerator (29) aufweist und das Anhalten des rotierenden Dorns (5) in Reaktion auf das Erreichen oder Überschreiten eines vorgegebenen Schwellenwerts der Stärke des zwischen der leitenden Lage (CC) und dem Plättchen (14) fließenden Stroms steuert.

3. Werkzeug nach Anspruch 2, **dadurch gekennzeichnet, dass** das Carbidplättchen (14) an dem oszillierenden Arm (11) über eine Welle (15) angebracht ist, um die das Plättchen (14) schwenken kann, derart, dass es sich ständig an die abzutragende Fläche (S) anschmiegt, vor allem dann, wenn diese konvex oder konkav ist.

4. Werkzeug nach Anspruch 2 oder 3, **dadurch gekennzeichnet, dass** die elektrische Verbindung zwischen dem Plättchen (14) und dem Kontaktdetektor (24) durch einen elektrischen Leiter (21) verwirklicht ist, der das Plättchen (14) mit einem Kollektor (19) verbindet, der an dem rotierenden Dom (5) angeordnet und mit einer Bürste (22) in Kontakt ist, die ihrerseits mit dem Detektor (24) verbunden ist.

5. Werkzeug nach Anspruch 4, **dadurch gekennzeichnet, dass** die elektrische Verbindung für eine Erfassung einer Anomalie in der Verbindung in zwei Teile geteilt ist.

6. Werkzeug nach einem der Ansprüche 2 bis 5, **dadurch gekennzeichnet, dass** es außerdem ein Spanabsaugsystem umfasst.

## Claims

1. A method of localised metallisation, on the surface, of pieces of composite material, of the type covered on the surface with a layer (CC) of an electrically conductive material, itself coated with an electrically insulating protective layer (P), such as paint or the like, **characterised in that**, after moulding said piece made from composite material with said conductive layer (CC) on the surface, the whole of the surface, on the conductive layer (CC) side of the piece, is coated with said paint or the like and then, in line with each area of said surface dedicated to a hole to be metallised, shaving is carried out until the conductive layer (CC) outcrops, by means of a metallic edge (16) pressed elastically and moved over the surface of the piece, the shaving edge being controlled consecutively until a predetermined threshold of electrical conduction between said conductive layer (CC) and said metallic edge (16) is reached or exceeded and, finally, the various holes in the piece are pierced and trimmed.

2. A metallising tool particularly intended to be mounted on a milling head of a numeric-control multi-axis machine (26, 27, 28), in particular for implementing the method according to claim 1, **characterised in that** it is formed of a rotary arbor (5) provided at its end with a transverse arm (7) carrying at one end a balancing mass (8) and at its other end a tool-holder arm (11) articulated on said transverse arm (7) about an axis (10) orthogonal to the axis (12) of the arbor (5), said tool-holder arm (11) being turned towards said axis (12) of the arbor and carrying a carbide tip (14) or the like, positioned so as to form a negative cutting angle (α) and to define a shaving edge (16), one end of which is in line with the axis (12) of the arbor (5), return means (13) being provided between the transverse arm (7) and the tool-holder arm (11) in order elastically to press the tip (14) or the like against the surface to be shaved (S), said tip (14) being electrically connected to a contact detector (24) itself connected on the one hand to the conductive layer (CC) of the piece to be metallised (25) by a removable connection (30, 31) and on the other hand to the numeric control (28) of the multi-axis machine, said detector (24) a current generator (29) and controlling the stoppage of said rotary arbor (5) following the reaching or exceeding of a predetermined threshold of intensity of the current flowing between the conductive layer (CC) and the tip (14).

3. A tool according to claim 2, **characterised in that** the carbide tip (14) is mounted on the rocking arm (11) through an axis (15) about which the tip (14) can pivot, so as to follow constantly the surface to be shaved (S), in particular when it is convex or concave.

4. A tool according to claim 2 or 3, **characterised in that** the electrical connection between the tip (14) and the contact detector (24) is achieved by means of an electrical conductor (21) connecting the tip (14) to a collector (19) arranged on the rotary arbor (5) and in contact with a brush (22) itself connected to said detector (24).

5. A tool according to claim 4, **characterised in that** said electrical connection is adapted for detection of an abnormality on said connection.

6. A tool according to one of claims 2 to 5, **characterised in that** it also has a swarf suction system.
